## Europäisches Patentamt
## European Patent Office
## Office européen des brevets

(19)

(11) Publication number: **0 032 639**
**B1**

(12) **EUROPEAN PATENT SPECIFICATION**

(45) Date of publication of patent specification: **22.05.85**

(51) Int. Cl.⁴: **C 12 C 3/02**

(21) Application number: **80304773.7**

(22) Date of filing: **31.12.80**

(54) **Process for the oxidation of lupulones to hulupones.**

(30) Priority: **07.01.80 US 110414**
**02.06.80 US 155686**

(43) Date of publication of application:
**29.07.81 Bulletin 81/30**

(45) Publication of the grant of the patent:
**22.05.85 Bulletin 85/21**

(84) Designated Contracting States:
**AT BE CH DE FR GB IT LI LU NL SE**

(56) References cited:
**DE-A-2 217 134**
**DE-A-2 244 895**
**DE-A-2 348 058**
**US-A-3 977 953**

(73) Proprietor: **PFIZER INC.**
**235 East 42nd Street**
**New York, N.Y. 10017 (US)**

(72) Inventor: **Wuesthoff, Michael Torrey**
**8 Monticello Court**
**Gales Ferry Connecticut (US)**

(74) Representative: **Graham, Philip Colin Christison et al**
**Pfizer Limited Ramsgate Road**
**Sandwich, Kent CT13 9NJ (GB)**

Courier Press, Leamington Spa, England.

**0 032 639**

**Description**

This invention relates to an improved method for winning bitter substances from hops and rendering them suitable for use as bittering agents in beer making. More particularly, it relates to an improved process for converting the so-called beta-acid component of the hop resins from hop cones, which are normally discarded in conventional brewing processes, into a form which can be used satisfactorily as a bittering agent in beer making. This process is an oxygenation reaction, in which lupulones are converted into hulupones.

The term "lupulones" is well known in the art to include not only lupulone itself, but other compounds present in the beta-acid component, including colupulone. Similarly, the term "hulupones" is well known in the art to include not only hulupone itself, but other compounds present in oxidised lupulones, including cohulupone.

Processes for the oxygenation of lupulones to hulupones are described in Belgian Patent No. 805,280; British Patent Nos. 701,177 and 1404534; United States Patents Nos. 4,013,721, 3,977,953 and 2,652,333, and West German Patent applications DE—A—2217134, 2244895 and 2348058. In particular DE—A—2348058 discloses a process in which lupulones are oxidised to hulupones in aqueous alkali with an oxidising agent in the presence of a catalyst and the hulupones are precipitated from the solution after the oxidation, as a separate step in the process.

This invention provides an improvement in the process for producing hulupones by oxidation of lupulones, using an oxygen-containing gas, in a substantially aqueous reaction medium rendered alkaline by the addition of an alkalyzing agent. Said improvement consists of carrying out the process using conditions under which the hulupone product is precipitated directly out of the reaction medium as the sodium or potassium salt. Precipitation is caused to occur quite conveniently by using a sodium-ion or potassium-ion containing alkalyzing agent, and running the process with a high initial concentration of lupulones. The same effect, i.e. that of causing the hulupones to precipitate as a sodium or potassium salt, is also achieved by using a reaction medium in which there is a high concentration of sodium or potassium ions. When a high sodium or potassium ion concentration is used, the sodium or potassium ions can be derived from the alkalyzing agent, or from a supplementary sodium ion or potassium ion source. Additionally, when a high sodium ion or potassium ion concentration is used, the sodium or potassium ions can be derived partly from the alkalyzing agent and partly from a supplementary sodium ion or potassium ion source.

Hops have been used in the brewing industry for hundreds of years, on account of their content of bitter substances. In a conventional brewing process, the hop cones are boiled with sweet wort in a copper kettle for about one to two hours, and then the wort is filtered and allowed to cool. During this boiling process, only a portion of the hop resins (the so-called alpha-acids or humulones) is extracted, and considerable residue (the so-called beta-acids or lupulones) remains on the hop strainer. The latter material is then discarded.

On the other hand, it was discovered that if hop cones which had been aged were examined, the lupulones had been partially converted into hulupones. These latter substances are freely soluble in the wort and have an excellent bitter taste. Following this discovery, much effort was expended to try and bring about the lupulone to hulupone conversion artificially, and in a manner that would be fast and economical enough to permit utilization of the lupulone-containing material which had previously been discarded.

Several methods have been developed for the oxidative conversion of lupulones to hulupones. For example, the conversion can be carried out using oxygen in the presence of sodium sulfite in alcoholic solution, or with sodium peroxydisulfate in ethanol. In another method lupulone-containing substances were dissolved in trichloroethylene and treated with oxygen.

However, the simplest and most convenient method of carrying out this conversion comprises dissolving lupulone-containing material in a substantially aqueous reaction medium, at an alkaline pH, and treating this solution with oxygen gas, optionally in the presence of a catalyst. Although this method has been used successfully, it suffers from disadvantages, and the purpose of the present invention is to provide an improvement in this process. Said improvement comprises conducting the reaction using conditions under which substantially all of the hulupone product precipitates directly from the reaction medium as a sodium or a potassium salt. This offers the unexpected advantage of providing hulupones of higher purity than has been possible hitherto. In particular, the expedient of causing the products to precipitate directly from the reaction medium avoids the problem of overoxidation, a common problem with the prior art processes. Additionally, by causing the products to precipitate directly from the reaction medium, a purer product is obtained, since impurities are retained in solution.

The present invention offers the further advantage of simplified isolation of products. Whereas prior art processes require that the reaction mixture be acidified and extracted with a water-immiscible organic solvent, or the hulupones precipitated from the reaction mixture after oxidation, as a separate step, the process of the present invention allows direct isolation of the hulupone salts from the reaction mixture.

Additionally, the use of concentrated solutions offers economic advantages and advantages of convenience when working on an industrial scale.

In carrying out the process of this invention, lupulones, or lupulone-containing material, are dissolved in a substantially aqueous solution, at a pH in the range from about 10 to about 14, preferably 13 to 14. This

2

solution is then contacted with an oxygen-containing gas, at a temperature in the range from about 25 to about 100°C, preferably 50—90°C. It is possible simply to bubble the oxygen-containing gas through the reaction medium, with good agitation; however, particularly when working on a large scale, it is usually more convenient to use a sealed reaction vessel containing the lupulone solution and substantially pure oxygen gas. Under these conditions the pressure inside the reaction vessel is usually in the range from about 10 to about 120 psig, with a pressure of about 50 to about 100 psig being preferred.

The pH value of 10 to 14 is achieved by adding an alkalyzing agent to the reaction medium, and a wide variety of alkalyzing agents can be used, including both organic and inorganic types. The major requirements for the alkalyzing agent are that the $pK_a$ of its conjugate acid must be sufficiently high that a pH of 10 to 14 can be achieved, and the alkalyzing agent must not adversely interact with either the lupulone reactant or the hulupone product. Examples of organic alkalyzing agents are tertiary amines, such as triethylamine or N-methylpiperidine; examples of inorganic alkalyzing agents are the hydroxides, carbonates and phosphates of the alkali metals, e.g. the hydroxides, carbonates and phosphates of sodium and potassium. Sodium hydroxide and potassium hydroxide are particularly useful agents.

The term "oxygen-containing gas" refers to pure oxygen and to oxygen diluted with inert diluents such as nitrogen and argon, and it includes air.

Reaction times vary according to a variety of factors, such as the reaction temperature, the concentration of the lupulone solution and the partial pressure of the oxygen. However, at a temperature of 50 to 90°C, and working in a sealed vessel with pure oxygen at a pressure of about 50 to 100 psig, with lupulone concentrations of about 5 to 30% on a weight per volume basis, reaction times of about 0.5 to 2 hours are commonly used. In any event, it is usually preferable to monitor the reaction by following oxygen uptake. Usually the reaction is stopped when from about 100 to about 170 mole percent of oxygen has been absorbed, based on the initial lupulone starting material.

As indicated hereinbefore, the process of this invention is carried out under conditions which cause the hulupone product to precipitate as its sodium or potassium salt. This is most simply achieved by using a sodium-ion or potassium-ion containing alkalyzing agent and working at higher initial concentrations of lupulones than have been used hitherto. Specifically, it has been found that when a sodium-ion or potassium-ion containing alkalyzing agent is used, substantially all the hulupones (i.e. at least 85%) will precipitate if an initial concentration of lupulones of between 15 and 30 percent, on a weight per volume basis, is used. The preferred initial lupulone concentration is 20 to 25 percent.

The process of this invention can also be carried out at initial lupulone concentrations of less than 15 percent. Under these circumstances, the hulupone product is induced to precipitate (as its sodium or potassium salt) by conducting the reaction in the presence of a large excess of a cation selected from the group consisting of sodium and potassium. Effectively, this depresses the solubility of the sodium or potassium salt of the hulupone, and thus causes it to precipitate. Using this technique, initial concentrations of lupulones of as low as about 3 percent can be oxidized efficiently.

The amount of excess sodium or potassium ion varies with the initial concentration of the lupulones, but total concentrations of sodium ions from about 0.5 to about 3.0 molar, and total concentrations of potassium ions from about 1.0 to about 5.0 molar, are normally used. Clearly, cation concentrations from the higher ends of these ranges are used when the initial concentration of lupulones is low, while cation concentrations from the low ends of these ranges are used when the initial concentration of lupulone is high.

In order to achieve the excess sodium ion or potassium ion levels, it is possible simply to use an excess of a sodium-ion containing or potassium-ion containing alkalyzing agent. Thus, when a sodium-ion concentration of 0.5 to 3.0 molar is required, sufficient sodium-ion containing alkalyzing agent, such as sodium hydroxide, sodium carbonate or sodium phosphate, or mixture thereof, is added to give the requisite concentration. In like manner, when a potassium ion concentration of 1.0 to 5.0 molar is required, sufficient potassium-ion containing alkalyzing agent, such as potassium hydroxide, potassium carbonate or potassium phosphate, or mixture thereof, is added to give the requisite concentration.

However, when using a sodium-ion containing or potassium-ion containing alkalyzing agent, it is possible to use a reaction medium in which some of the sodium or potassium ion comes from the alkalyzing agent and the remainder comes from the addition of one or more supplementary cation sources. Additionally, when using an alkalyzing agent which does not contain sodium or potassium ions, it is possible to use a reaction medium in which all the sodium or potassium ion comes from the addition of one or more supplementary cation sources.

A wide variety of supplementary cation sources can be used. The major requirements for such an agent are that it liberates ionic sodium or potassium on dissolution in water, and that the counterion thus liberated does not adversely affect the lupulones or the hulupones. Sodium or potassium salts of both inorganic and organic acids can be used; however, for reasons of accessibility and economy, convenient supplementary sodium ion sources are sodium chloride, sodium sulfate and sodium acetate, and convenient supplementary potassium ion sources are potassium chloride, potassium sulfate and potassium acetate.

As indicated hereinbefore, the process of this invention represents an improvement over known processes for oxidizing lupulones to hulupones, with oxygen gas, in a substantially aqueous, alkaline medium. It is known that such processes can be carried out in the presence of a wide variety of catalysts,

**0 032 639**

and it is to be understood that the improvement disclosed and claimed herein applies equally well to catalyzed as well as uncatalyzed processes. It is known that both homogeneous and heterogeneous catalysts can be used and that heterogeneous catalysts can be used in both supported and unsupported forms. The improvement of this invention applies in all situations. In particular, the improvement applies to the processes disclosed in United States Patents Nos. 4,013,721 and 2,652,333, and Belgian Patent No. 805,280.

The hulupone product obtained from the process of this invention is readily isolated by conventional techniques. For example, the product can be recovered simply by filtration, and it can be purified by known methods for hulupone compounds, if desired. In the case wherein a heterogeneous catalyst has been used, a simple method of purification which is often used involves dissolution of the hulupone in methanol, filtration of the methanol solution and removal of the methanol by solvent evaporation.

The following examples are provided for further illustration; however, they are not to be construed as imposing any limitations on this invention.

Example 1

Oxidation of a colupulone-lupulone mixture using a cobaltic oxide catalyst

To a solution of 100.0 g (246 mmole) of a 65:35 colupulone-lupulone mixture, in 500 ml of 1.5 $M$ sodium hydroxide, 1.0 g of cobaltic oxide catalyst was added. The reaction vessel was charged with nitrogen to 30 psig, and then heated to 60°C with shaking. At this point the shaking was stopped, the nitrogen pressure was released, and the reaction vessel was charged with oxygen to a pressure of 70 psig. The vessel was shaken and heated for 40 minutes. During this period the temperature and pressure varied according to the following:

| Time (minutes) | Pressure (psig) | Temperature (°C) |
|---|---|---|
| 0 | 70 | 80 |
| 1 | 65 | 80 |
| 2 | 62 | 80 |
| 3 | 60 | 88 |
| 4 | 57 | 88 |
| 6 | 54 | 98 |
| 9 | 52 | 98 |
| 11 (repressurized) | 70 | 98 |
| 13 | 68 | 98 |
| 20 | 65 | 98 |
| 28 | 62 | 98 |
| 40 | 60 | 98 |

At this point the shaking was stopped, the reaction vessel was cooled, and the oxygen pressure was released. Total oxygen consumption was 350 mmole, which is equivalent to 1.42 mole per mole of lupulones.

The supernatant liquid was removed by decantation, and the residue was washed twice with 150 ml of water. This afforded 63.0 g of crude cohulupone-hulupone product.

The product was assayed by ultraviolet spectroscopy, according to standard techniques. The assay indicated that the crude product contained 50% hulupones, which corresponds to a 40% yield.

The product was also assayed by high-pressure liquid chromatography (HPLC), according to standard techniques. This assay indicated that the crude product contained 34% cohulupone and 19% hulupone. This corresponds to a 42% yield of hulupones.

Example 2

Oxidation of colupulone

To a solution of 5.0 g (12.5 mmoles) of colupulone in 25 ml of 1.5 $M$ sodium hydroxide in a pressure

4

bottle, was added the catalyst (see Table I, below). The reaction vessel was heated to the reaction temperature (Table I), pressurized to 55—60 psig with oxygen, and shaken until the pressure drop levelled off. The reaction vessel was cooled to room temperature, and the supernatant liquid was removed by decantation. The residue was washed with water and then it was dissolved in methanol. The methanol solution was filtered (except for Run 5), and evaporated to dryness *in vacuo* to give the crude product. The product was assayed for cohulupone by ultraviolet spectroscopy, according to standard techniques.

TABLE I

| Run | Catalyst | Temperature (°C) | Reaction time (mins) | Oxygen uptake (mmole) | Crude yield (g) | Product purity (% sodium cohulupone) | Yield (%) corrected for purity |
|-----|----------|------------------|----------------------|-----------------------|-----------------|--------------------------------------|--------------------------------|
| 1 | 151 mg of 10% platinum-on-carbon | 25 | 91 | 20.5 | 3.05 | 53.6 | 38 |
| 2 | 60 mg of 10% platinum-on-carbon | 100 | 64 | 19.0 | 2.79 | 57.7 | 38 |
| 3 | None | 80 | 42 | 19.0 | 2.28 | 61.7 | 33 |
| 4 | 51 mg of 10% platinum-on-carbon | 50 | 40 | 20.2 | 2.65 | 70.0 | 44 |
| 5 | 203 mg sodium vanadate | 80 | 50 | 20.1 | 2.95 | 55.6 | 39 |
| 6 | 39 mg of platinum | 80 | 31 | 22.7 | 2.76 | 62.4 | 41 |
| 7 | 47 mg of cobaltic oxide | 80 | 35 | 17.3 | 3.39 | 57.9 | 46 |
| 8 | 47 mg of platinum oxide | 80 | 63 | 19.6 | 2.43 | 70.2 | 40 |

Example 3
Oxidation of colupulone in the presence of sodium sulfate
To a solution of 2.5 g (6.24 mmole) of colupulone and 5.4 g (38 mmole) of sodium sulfate in 38 ml of 0.5 *M* sodium hydroxide, in a pressure vessel, was added 95 mg of 10% platinum-on-carbon. The reaction vessel was heated to 80°C and pressurized to 60 psig with oxygen. The reaction vessel was then shaken until the pressure drop levelled off. This required 100 minutes, and the oxygen uptake was 10.0 mmole. The supernatant liquid was removed by decantation, and the residue was washed with water and dissolved in methanol. The catalyst was removed by filtration, and then evaporation *in vacuo* afforded 1.47 g of a light brown solid, containing 58% cohulupone sodium salt, according to an assay by ultraviolet spectroscopy.

Example 4
The procedure of Example 3 is repeated, except that the sodium sulfate is replaced by 76 mmoles of sodium chloride and sodium acetate, respectively. This affords, in each case, cohulupone sodium salt.

Example 5
Cohulupone potassium salt
To a solution of 6.0 g (15 mmole) of colupulone and 4.0 g (23 mmole) of potassium sulfate in 38 ml of 1.5 *M* potassium hydroxide, in a pressure vessel, is added 100 mg of 10% platinum-on-carbon. The reaction vessel is heated to 80°C, and then it is pressurized to 60 psig with oxygen. The reaction vessel is shaken until the pressure drop levels off. The reaction vessel is cooled and opened, and the reaction mixture is filtered. The residue is washed with a small volume of cold water, and then methanol is added. The insoluble material is removed by filtration, and then the methanol is removed by evaporation *in vacuo* to give cohulupone potassium salt.

Example 6
The procedure of Example 5 is repeated, except that the potassium sulfate is replaced by 90 mmoles of potassium chloride and potassium acetate, respectively. This affords, in each case, cohulupone potassium salt.

Example 7
Oxidation of a crude beta-acid fraction of hop extract

To 50 ml of a basic aqueous hop extract fraction, 1.4 $M$ in sodium hydroxide, and containing 8.65 g (21.4 mmole) of beta-acids according to an assay by ultraviolet spectroscopy, in a pressure vessel, was added 101 mg of cobaltic oxide. The reaction mixture was heated to 80°C, pressurized to 70 psig with oxygen, and then shaken until the pressure drop began to level off. This took 24 minutes, and the oxygen consumption was 30.8 mmole. The supernatant liquid was removed by filtration, and the residue was washed with water. The residue was then dissolved in methanol. The methanol solution was filtered and then evaporated to dryness to give 6.57 g of a light brown solid. Assay by ultraviolet spectroscopy indicated that the product contained 36.2% hulupones (33% yield).

## Claims

1. A process for the oxidation of lupulones to hulupones, using an oxygen-containing gas, in a substantially aqueous reaction medium rendered alkaline using an alkalyzing agent, at a temperature in the range from 25 to 100°C, using an initial concentration of lupulones of at least 3 percent, and recovering the hulupones by precipitation, characterized by:

(i) carrying out the oxidation process in a reaction medium to which either sodium ions have been added to give a concentration of sodium ions in the range from 0.5 to 3.0 molar and sufficient to cause substantially all of the hulupones to precipitate directly from the reaction medium as the sodium salt, or potassium ions have been added to give a concentration of potassium ions in the range from 1.0 to 5.0 molar and sufficient to cause substantially all of the hulupones to precipitate directly from the reaction medium as the potassium salt; and

(ii) thereafter recovering the hulupones from the reaction medium as said sodium or potassium salt.

2. The process according to claim 1, characterized in that the process is carried out in a reaction medium to which an alkalyzing agent selected from sodium hydroxide, sodium carbonate and sodium phosphate has been added in order to achieve a concentration of sodium ions in the range from 0.5 to 3.0 molar.

3. The process according to claim 2, characterized in that said alkalyzing agent is sodium hydroxide.

## Patentansprüche

1. Verfahren zur Oxidation von Lupulonen zu Huluponen unter Verwendung eines sauerstoffhaltigen Gases in einem im wesentlichen wässrigen, unter Verwendung eines alkalisch machenden Mittels alkalisch gemachten Medium bei einer Temperatur im Bereich von 25 bis 100°C unter Verwendung einer Ausgangskonzentration an Lupulonen von wenigstens 3% und Gewinnen der Hulupone durch Ausfällen, gekennzeichnet durch

(i) Durchführen des Oxidationsprozesses in einem Reaktionsmedium, dem entweder Natriumionen zugesetzt worden sind, um eine Konzentration an Natriumionen im Bereich von 0,5 bis 3,0-molar zu ergeben, und ausreichend, praktisch alle Hulupone direkt aus dem Reaktionsmedium als Natriumsalz ausfallen zu lassen, oder dem Kaliumionen zugesetzt worden sind, um eine Konzentration an Kaliumionen im Bereich von 1,0 bis 5,0-molar zu ergeben, und ausreichend, praktisch alle Hulupone direkt aus dem Reaktionsmedium als Kaliumsalz ausfallen zu lassen, und

(ii) anschließendes Gewinnen der Hulupone aus dem Reaktionsmedium als Natrium- oder Kaliumsalz.

2. Verfahren gemäß Anspruch 1, dadurch gekennzeichnet, daß das Verfahren in einem Reaktionsmedium durchgeführt wird, dem ein alkalisch machendes Mittel, ausgewählt unter Natriumhydroxid, Natriumcarbonat und Natriumphosphat, zugesetzt worden ist, um eine Konzentration an Natriumionen im Bereich von 0,5 bis 3,0-molar zu erzielen.

3. Verfahren gemäß Anspruch 2, dadurch gekennzeichnet, daß das alkalisch machende Mittel Natriumhydroxid ist.

## Revendications

1. Procédé d'oxydation de lupulones en hulupones, en utilisant un gaz contenant de l'oxygène, dans un milieu réactionnel principalement aqueux rendu alcalin au moyen d'un agent alcalinisant, à une température comprise dans l'intervalle de 25 à 100°C, en utilisant une concentration initiale en lupulones d'au moins 3%, et en recueillant les hulupones par précipitation, caractérisé par le fait que:

(i) l'opération d'oxydation est conduite dans un milieu réactionnel auquel des ions sodium ont été ajoutés pour qu'il y ait une concentration molaire en ions sodium dans l'intervalle de 0,5 à 3,0 suffisante pour provoquer la précipitation de la quasi-totalité des hulupones directement dans le milieu réactionnel sous la forme du sel de sodium, ou bien des ions potassium ont été ajoutés pour qu'il y ait une concentration molaire en ions potassium dans l'intervalle de 1,0 à 5,0 suffisante pour provoquer la précipitation de la quasi-totalité des hulupones directement dans le milieu réactionnel sous la forme du sel de potassium; et

(ii) les hulupones sont ensuite recueillies dans le milieu réactionnel sous la forme du sel de sodium ou du sel de potassium.

2. Procédé suivant la revendication 1, caractérisé en ce qu'il est mis en oeuvre dans un milieu réactionnel auquel un agent alcalinisant choisi entre l'hydroxyde de sodium, le carbonate de sodium et le phosphate de sodium a été ajouté de manière qu'il y ait une concentration molaire en ions sodium dans l'intervalle de 0,5 à 3,0.

3. Procédé suivant la revendication 2, caractérisé en ce que l'agent alcalinisant est l'hydroxyde de sodium.